Europäisches Patentamt

European Patent Office

Office européen des brevets

(11) Numéro de publication : **0 472 466 A1**

# (12) DEMANDE DE BREVET EUROPEEN

(21) Numéro de dépôt : **91402274.4**

(22) Date de dépôt : **20.08.91**

(51) Int. Cl.⁵ : **H01S 3/102,** H01S 3/105, H01S 3/092

(30) Priorité : **20.08.90 FR 9010469**

(43) Date de publication de la demande :
**26.02.92 Bulletin 92/09**

(84) Etats contractants désignés :
**DE GB**

(71) Demandeur : **CHEVAL FRERES S.A.**
**Chemin des Bosquets**
**F-25480 Ecole Valentin (FR)**

(72) Inventeur : **Billod Morel, Philippe, Cabinet**
**Ballot-Schmit**
**7, rue Le Sueur**
**F-75116 Paris (FR)**

(74) Mandataire : **Ballot, Paul Denis Jacques et al**
**Cabinet Ballot-Schmit 7, rue le Sueur**
**F-75116 Paris (FR)**

(54) **Dispositif générateur d'un faisceau laser continu ou pulsé.**

(57) L'invention concerne un dispositif pour générer un faisceau LASER.

L'invention réside dans le fait que le dispositif comprend un moyen (5,20) pour générer un faisceau LASER en régime continu, un moyen (6,7) pour générer un faiseau LASER en régime pulsé et un système optique (10) de miroirs déplaçables à coefficient de transmission différent selon le régime continu ou pulsé. Des moyens de commutation (5) sont prévus pour passer d'un régime à l'autre sous la commande de moyens (4). Des moyens de déclenchement (8,9) permettent d'obtenir un fonctionnement en régime continu-déclenché ou pulsé-déclenché.

EP 0 472 466 A1

FIG_1

L'invention concerne un dispositif pour générateur d'un faisceau LASER.

Elle concerne plus particulièrement un dispositif générateur d'un faisceau LASER pouvant fonctionner selon des régimes différents.

On connaît déjà des dispositifs générateur de faisceau LASER. Toutefois, ces dispositifs ne permettent d'avoir qu'un régime de fonctionnement savoir soit un régime continu, soit un régime pulsé.

Un des buts de la présente invention est de proposer un dispositif générateur d'un faisceau LASER pouvant fonctionner selon plusieurs régimes, le passage d'un régime à l'autre étant effectué soit automatiquement soit semi-automatiquement et de manière très rapide.

A cet effet, l'invention propose un dispositif générateur d'un faisceau LASER comprenant un générateur d'un faisceau LASER, avantageusement un LASER solide du type YAG, le dispositif se caractérisant en ce qu'il comprend un moyen pour générer un faisceau LASER en régime continu, un moyen pour générer un faisceau LASER en régime pulsé, des moyens pour commuter le dispositif en régime continu ou en régime pulsé, un système de miroirs déplaçables et des moyens de commande pour commander lesdits moyens de génération du faisceau LASER et lesdits moyens de commutation.

Selon une autre caractéristique de l'invention, le système de miroirs comprend au moins deux miroirs à pouvoir de transmission différent, notamment un à pouvoir de transmission élevé permettant le fonctionnement en régime pulsé et un à pouvoir plus faible pour le régime continu.

Ce système de miroirs comprend également des moyens pour régler la position de chacun des miroirs par rapport au faisceau LASER (parallélisme par exemple).

Selon un mode de réalisation préféré de l'invention, les deux miroirs sont montés sur un support qui est lui-même monté de manière déplaçable sur un châssis. Avantageusement, le support peut être déplacé soit par translation longitudinale ou latérale par exemple par un système de glissières, soit par rotation autour d'un axe de pivotement, ou selon des mouvements combinés.

Avantageusement, ce système de miroirs comprend des moyens pour déplacer le support pour ainsi amener le miroir correspondant en regard du faisceau LASER en fonction du régime choisi.

Dans un mode de réalisation préféré, ces moyens de déplacement sont commandés par les moyens de commande du dispositif.

Selon une autre caractéristique de l'invention, le dispositif comprend des moyens de déclenchement du faisceau LASER permettant d'obtenir soit un régime pulsé-déclenché, soit un régime continu-déclenché. Ces moyens de déclenchement comprennent notamment un "Q-switch".

Par ailleurs, les moyens de commutation comprennent un commutateur statique, électromécanique, électromagnétique ou un commutateur mixte.

D'autres buts, avantages et détails apparaîtront plus clairement au vu de la description détaillée d'un mode de réalisation de l'invention faite en référence aux figures annexées dans lesquelles :

– la figure 1 est un schéma synoptique du dispositif de l'invention,

– la figure 2 est une représentation schématique de face d'un mode de réalisation d'un système à miroirs du dispositif de l'invention, et

– la figure 3 est une vue de dessus du système à miroirs représenté à la figure 2.

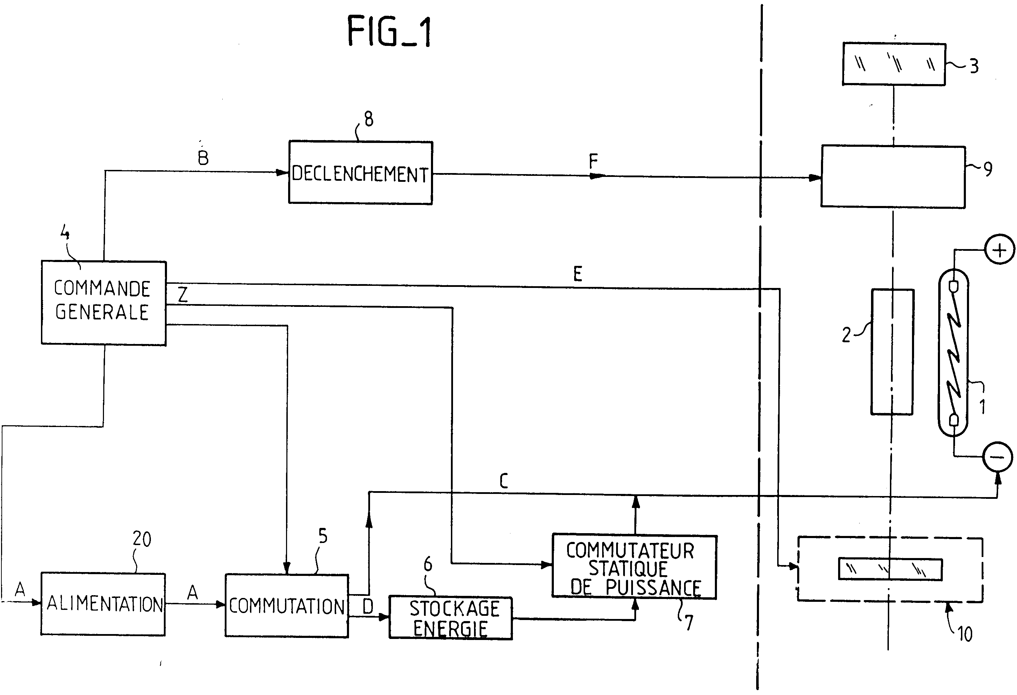

Un dispositif générateur d'un faisceau LASER conforme à l'invention sera décrit dans son principe de fonctionnement en référence à la figure 1.

Ce dispositif comprend une lampe de pompage 1 reliée à une source de courant électrique non illustrée et un barreau LASER 2, par exemple du type YAG.

Ce dispositif comprend également un miroir 3 permettant de réfléchir le rayon laser dans un système optique 10 de traitement du faisceau laser.

L'alimentation en courant électrique de la lampe est reliée à une commande générale 4 par l'intermédiaire d'un circuit comprenant une alimentation 20 et un commutateur 5. Ce circuit se divise en deux branches disposées en parallèle et dont l'activation est commandée par le commutateur.

La première branche C permet une commande de la lampe de pompage 1 en fonctionnement en régime continu.

La seconde branche D permet une commande de la lampe 1 en fonctionnement en régime pulsé.

Dans l'exemple illustré, cette branche D comprend un moyen 6 de stockage de l'énergie tel qu'un condensateur et un commutateur 7 de puissance qui peut être du type statique ou électromécanique.

Selon le mode de réalisation illustré, le dispositif comprend un moyen pour déclencher le faisceau laser constitué par un déclencheur 8 (connexion B) et un interrupteur Q-switch 9 (connexion F).

Avantageusement, le déclencheur 8 est commandé par le moyen 4 de commande générale.

Ainsi, par actionnement du moyen 4 de commande générale, on peut choisir le mode de fonctionnement du faisceau laser. Par exemple, le moyen de commande peut actionner le commutateur 5 pour activer la branche C. Dans cette configuration, la lampe de pompage 1 fonctionne en régime continu.

Au contraire, dans une autre position, la branche D est activée et la lampe de pompage 1 fonctionne en régime pulsé.

Dans ces deux configurations, le moyen de déclenchement 8 peut être activé (connexions B et F) pour ainsi obtenir un fonctionnement en régime continu-déclenché ou pulsé-déclenché.

Toutefois, selon le régime de fonctionnement, le système optique 10, et notamment le miroir de transmission qu'il comporte doit être modifié.

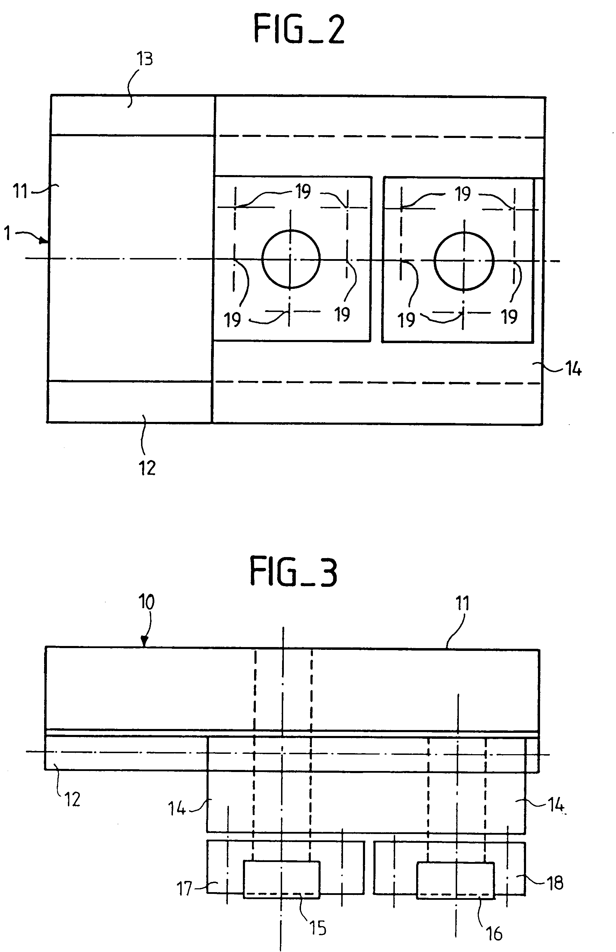

Le dispositif conforme à l'invention comprend le système 10 de miroirs illustré plus en détail aux figures 2 et 3.

Ce système comprend un châssis 11 comprenant des rails 12,13 sur lesquels est monté coulissant un support 14. Ce support 14 peut aussi être pivotant.

Sur ce support 14 sont montés deux miroirs 15,16 par l'intermédiaire de cadres support 17,18.

La position de ces cadres support peut être réglée, par exemple par des systèmes de vis 19 de réglage.

Dans le mode de réalisation illustré, le miroir 16 a un coefficient de transmission de l'ordre de 50% qui sera disposé sur le chemin du faisceau laser par déplacement du support 14 quand le faisceau fonctionne en régime pulsé.

Le déplacement du support 14 est avantageusement asservi au moyen 4 de commande générale. Cet asservissement est symbolisé par la connexion E de la figure 1.

Le dispositif de l'invention décrit ci-dessus permet de générer un faisceau laser selon plusieurs régimes de fonctionnement, le choix de ces régimes étant réalisé par une simple commande qui permet un changement rapide, automatique ou semi-automatique du système optique du faisceau laser.

Le dispositif de l'invention est donc un dispositif polyvalent, ce qui est très important dans certaines applications.

Le système de miroirs illustré et décrit n'est donné qu'à titre d'exemple; c'est ainsi que la forme du châssis, des supports, le système de montage du support sur le châssis peuvent être différents sans sortir du cadre de l'invention. Il en est de même pour la forme et le coefficient des transmissions.

## Revendications

1. Dispositif générateur d'un faisceau LASER comprenant un générateur (1,2,3) d'un faisceau LASER à une longueur d'onde déterminée, caractérisé en ce qu'il comprend un moyen (20) pour générer un faisceau LASER à ladite longueur d'onde déterminée en régime continu, un moyen (6,7) pour générer un faisceau LASER à ladite longueur d'onde déterminée en régime pulsé, des moyens (5) pour commuter le dispositif en régime continu ou pulsé, un système (10) de miroirs déplaçables, des moyens de déclenchement (8,9) du faisceau LASER pour obtenir en fonctionnement un régime continu-déclenché ou pulsé-déclenché et des moyens (4) de commande pour commander lesdits moyens de génération (20,6,7) du faisceau LASER, lesdits moyens de commutation (5) et lesdits moyens de déclenchement (8,9).

2. Dispositif selon la revendication 1, caractérisé en ce que le système (10) de miroirs comprend au moins deux miroirs (15,16) à pouvoir de transmission différent.

3. Dispositif selon la revendication 2, caractérisé en ce que le système de miroirs (10) comprend des moyens (19) pour régler la position des miroirs.

4. Dispositif selon la revendication 2 ou 3, caractérisé en ce que les deux miroirs (15,16) sont montés sur un châssis (11), lui-même monté de manière déplaçable en rotation ou en translation sur un support (14).

5. Dispositif selon l'une des revendications 2 à 4, caractérisé en ce que le système (10) de miroirs comprend des moyens pour déplacer le châssis (14), commandés par les moyens de commande (4).

6. Dispositif selon l'une des revendications précédentes, caractérisé en ce que les moyens de commutation comprennent un commutateur statique (7) ou électromécanique.

7. Dispositif selon l'une des revendications précédentes, caractérisé en ce que les moyens de déclenchement comprennent un Q-switch (9).

# FIG_1

COMMANDE GENERALE (4)

DECLENCHEMENT (8)

ALIMENTATION (20)

COMMUTATION (5)

STOCKAGE ENERGIE (6)

COMMUTATEUR STATIQUE DE PUISSANCE (7)

EP 0 472 466 A1

# FIG_2

# FIG_3

Office européen
des brevets

# RAPPORT DE RECHERCHE EUROPEENNE

Numero de la demande

EP    91 40 2274

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 197 748 (J.TULIP)<br>* page 6, ligne 19 - ligne 24 *<br>* page 9, ligne 12 - ligne 19; revendications 9-11; figure 1 *<br>--- | 1-6 | H01S3/102<br>H01S3/105<br>H01S3/092 |
| A | DE-A-3 705 971 (MIKRON-LASER-SYSTEME)<br>* abrégé; figure 1 *<br>--- | 1,7 | |
| A | PATENT ABSTRACTS OF JAPAN<br>vol. 7, no. 190 (E-194)(1335) 19 Août 1983<br>& JP-A-58 093 295 ( HITACHI SEISAKUSHO K.K. ) 2 Juin 1983<br>* abrégé *<br><br>----- | 1 | |

**DOMAINES TECHNIQUES RECHERCHES (Int. Cl.5)**

H01S

Le présent rapport a été établi pour toutes les revendications

| Lieu de la recherche | Date d'achèvement de la recherche | Examinateur |
|---|---|---|
| LA HAYE | 07 NOVEMBRE 1991 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)